(19) Europäisches Patentamt
European Patent Office
Office européen des brevets

(11) Publication number: **0 161 763**
**A1**

(12) # EUROPEAN PATENT APPLICATION

(21) Application number: **85302100.4**

(22) Date of filing: **26.03.85**

(51) Int. Cl.⁴: **C 08 F 226/04**, C 08 F 2/32

(30) Priority: **26.03.84 US 593145**

(43) Date of publication of application: **21.11.85**
**Bulletin 85/47**

(84) Designated Contracting States: **DE FR GB**

(71) Applicant: **ATLANTIC RICHFIELD COMPANY, 515 South Flower Street, Los Angeles California 90071 (US)**

(72) Inventor: **Dixon, Kenneth W., 34 Colonial Circle, Thorton Pennsylvania (US)**

(74) Representative: **Cropp, John Anthony David et al, MATHYS & SQUIRE 10 Fleet Street, London, EC4Y 1AY (GB)**

(54) **Water swellable copolymers having high water absorbency.**

(57) Novel water-insoluble, water-swellable copolymers of diallyl quaternary ammonium salts and one or more other monofunctional vinyl compounds are prepared by copolymerizing the corresponding monomers in the presence of a polyfunctional vinyl compound as a crosslinking agent.

EP 0 161 763 A1

# WATER SWELLABLE COPOLYMERS HAVING HIGH WATER ABSORBENCY

This invention relates to water absorbent resins and more particularly to water-insoluble, water-swellable copolymers prepared from allylic quaternary ammonium salts.

## PRIOR ART

Water absorbent resins are widely used in the manufacture of products which require high water absorption capability. For example, water absorbent resins are used in the manufacture of surgical and dental sponges, catamenial tampons, diapers, meat trays, household pet litter, mats, etc. These resins are also used for the modification of soil to improve water retention and increase air capacity and for a host of other applications.

Various natural and synthetic fibers have been used for the manufacture of water absorption materials. Natural or modified natural fibers, such as cellulose and carboxymethyl cellulose have been used in the manufacture of aqueous liquid-absorbing products, but these materials can only absorb relatively small amounts of water, i.e., at most 30 times the weight of the polymer. Other water absorbent resins materials, such as starch-acrylonitrile graft copolymer can absorb large amounts of deionized

water, such as up to 300 to 500 times their own weight, but the water absorption capacity of these resins drops considerably, i.e. to about 30 to 40 times the weight of the resin when they are used for the absorption of saline solutions. Thus, the utility of such resins is diminished considerably when they are used for the absorption of such salt-containing fluids as urine and catamenial fluids.

A number of polymers have been developed which have improved stability and deionized water and saline liquid absorption capacity. Thus, U.S. patent 3,669,103 discloses the preparation of water-absorbing polymers of partially crosslinked polyacrylamide and poly (alkali metal acrylate) which are prepared by radical polymerization in an aqueous liquid of the corresponding monomer and a divinyl or diallyl cross-linking compound. U.S. patent 3,670,731 discloses water-absorbent articles made from crosslinked acrylamide polymers. U.S. patent 4,340,706 teaches that polymers of acrylic acid and an alkali acrylate polymerized in an inverse suspension using specific surfactants can absorb at least 80 times their own weight of saline solution. Other U.S. patents which disclose water absorbent polymers prepared from acrylic acid, acrylamide, or alkali metal acrylate are 4,093,776, 4,286,082 and 4,342,858.

The use of non-crosslinked polymers of diallyldimethylammonium chloride as drainage and retention aids has also been described in the literature. For example, Chemical Abstract 98:70459d describes poly(diallyldimethylammonium chloride) as a pigment dispersant and

retention aid, Chemical Abstract 97:180371f states that poly(diallydimethylammonium chloride) may be used as a flocculant in the clarification of water and Chemical Abstract 97:143241t states that diallyldimethylammonium chloride-acrylamide copolymer may be used as a drainage and retention aid in the manufacture of paper products intended for food contact. Other Chemical Abstracts which disclose the use of polymers and copolymers of diallyldimethylammonium chloride and/or diallydiethylammonium chloride and acrylamide include 97:196977u, 75:108624u and 87:182734u.

OBJECTS OF THE INVENTION

New water-insoluble, water-swellable polymeric compounds have now been discovered which have high deionized water and aqueous saline solution absorptive capacity. Accordingly it is an object of the invention to present new water-insoluble, water-swellable polymeric materials. It is another object of the invention to present new water-insoluble, water-swellable polymeric materials which have very high water absorptivity. It is another object of the invention to present water-insoluble, water-swellable polymers whose water absorptive properties are not significantly diminished when used to absorb saline solutions. It is another object of the invention to present a process for preparing new water-insoluble, water-swellable polymers. It is another objective of the invention to present a process for preparing new, partially crosslinked waterswellable polymers. It is another object of the invention to

present a process for preparing new water-insoluble, water-swellable polymers having excellent water absorbtion capability. These and other objects of the invention are supported in the following description and examples of embodiments of the invention.

SUMMARY OF THE INVENTION

The new polymeric compounds of the invention are partially crosslinked copolymers of at least one diallylic quaternary ammonium salt and at least one other water-soluble or water-dispersible monofunctional vinyl compound. The term "monofunctional vinyl compounds," as used in this description means addition polymerizable compounds which react alone or with other monofunctional vinyl compounds to form substantially linear polymers. In this sense diallyl quaternary ammonium salts are considered to be monofunctional vinyl compounds since they polymerize to form substantially linear polymers. Preferred copolymers are those prepared from diallydialkylammonium halides and one or more of acrylic or methacrylic acid or their alkali metal or ammonium salts or acrylamide.

Crosslinking of the polymer is accomplished by polymerizing the monomer charge in the presence of a sufficient amount of one or more polyfunctional vinyl compounds to react with the diallylic quaternary ammonium salt and/or the other monfunctional vinyl compound to form a water-insoluble, water-swellable polymeric compound. The term "polyfunctional vinyl compound", as used herein means addition polymerizable compounds which react alone or with monofunctional vinyl compounds to form three dimensional polymeric compounds. Accordingly, the term

polyfunctional vinyl compound does not include diallyl quaternary ammonium compounds. The preferred polyfunctional vinyl compounds are the triallylalkylammonium halides the tetraallylammonium halides and divinylbenzene.

The polymers of the invention are prepared by inverse suspension polymerization with an oil phase as the continuous phase and an aqueous phase as the discontinuous phase. The aqueous phase of the reaction mixture is comprised of water, the monomers, the crosslinking agent and catalyst. The continuous phase is comprised of the inert organic diluent or mixture of diluents. The two phase system may be formed in any desired order. According to one embodiment of the invention the aqueous phase of the reaction mixture is formed by combining and stirring the components sufficiently to form a uniform solution. The aqueous phase is then combined with the organic phase and the reaction suspension is established and maintained by means of agitation. The reaction vessel is purged with an inert gas, such as nitrogen, to scavenge oxygen from the reaction zone. The reactants are then heated to and maintained at the desired polymerization temperature. The reaction temperature is not critical and is determined by the particular reaction system employed. In general, reaction temperatures in the range of about 0 to 150°C, are usually used. Most often, a reaction temperature of about 30 to 100°C is preferred. During the reaction the reaction mixture is agitated sufficiently to maintain a stable suspension and to remove excess heat. When the desired degree of

conversion is attained the reaction is terminated by cooling the reaction mixture and recovering the product from the polymerization medium. One method of product recovery consists of removing the water from the reaction mixture, as by distillation, and separating the polymeric product from the inert diluent by filtration, decantation, centrifugation, etc. The polymer may be washed in an inert organic liquid to remove impurities such as suspending agents. The foregoing sequence of steps is exemplary only and is not intended to be limiting. Equivalent techniques for carrying out the reaction and recovering the product may be employed. Furthermore, if desired, the organic phase may be recovered and reused.

The polymeric product is obtained in the form of fine solid beads. The product can be used as is, pulverized, molded or otherwise formed into various products, depending upon the intended end use of the product. Typical product forms include film, powder, fiber, fabric, particulates, etc. The product can be combined with other materials, such as cotton, wood pulp, etc.

## DETAILED DESCRIPTION OF THE INVENTION

The diallylic quaternary ammonium compounds useable in the invention are any diallylic ammonium compounds which form environmentally acceptable water-swellable polymers. Suitable diallylic ammonium compounds are those having the structural formula

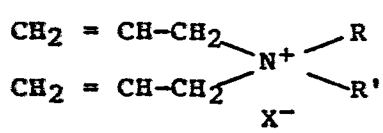

wherein R and R' are organic radicals which are free of substituents which would unduly interfere with the formation of environmentally acceptable water-swellable polymers and X is an environmentally acceptable anion. Thus R and R' may be hydrocarbon radicals, such as saturated aliphatic and cycloaliphatic hydrocarbon radicals, aromatic hydrocarbon radicals and substituted hydrocarbon radicals, such as carboxylates, ethers, alcohols, esters, etc. R and R' may be the same or different radicals. R and R' may also be joined together to form a nitrogen-containing ring compound. As indicated above, the only restrictions on R and R' is that they do not, to an unacceptable degree, adversely interfere with the ability of the monomer to form the desired polymeric product, that they do not prevent the polymeric product from performing in the intended manner and that they do not result in the formation of environmentally unacceptable products. Thus, subject to these restrictions, R and R' may have any number of carbon atoms or be any substituents. In a preferred embodiment of the invention R and R' are saturated aliphatic or cycloaliphatic hydrocarbons having 1 to 20 and more preferably 1 to 6 carbon atoms.

The radical X in the above formula may represent an anion which likewise must not, to an unacceptable extent, interfere with the ability of the monomer to form the desired product, interfere with the desired performance of the desired product or result in the formation of environmentally unacceptable products.

X may be an inorganic anion, such as halide, nitrate, nitrite, phosphate, etc. ion, or an organic anion, such as acetate, propionate, etc. radical. In the preferred embodiment X is a halide ion. Preferred halide ions are the chloride and bromide ions.

Typical of compounds falling within the scope of the above description are aliphatic and aromatic diallyldihydrocarbylammonium salts, such as diallyldimethylammonium chloride, diallyldimethylammonium bromide, diallyldiethylammonium chloride, diallylethylmethylammonium chloride, diallyldidecylammonium bromide, diallydibenzylammonium chloride, diallylbenzylmethylammonium bromide, diallyldimethylammonium nitrate, diallyldiethylammonium acetate, etc; and diallyldiorganoammonium salts containing hetero atoms, such as N,N-diallyl-N,N-diethoxymethylammonium chloride, N,N-diallyl-N,N-dicarboxypropylammonium chloride, etc. Preferred diallylammonium salts are the diallyldihydrocarbylammonium halides, particularly the diallyldialkyl ammonium salts of chlorine and bromine, such as diallyldimethylammonium chloride, diallyldimethylammonium bromide, diallyldiethylammonium chloride, diallylethylmethylammonium chloride, etc.

The other water-dispersible monofunctional vinyl compounds which are suitable for use in preparing the invention are vinyl compounds which are copolymerizable with the diallylic quaternary ammonium compounds. The following groups of vinyl compounds are typical of the most common useful vinyl compounds, but this list is not intended to be all inclusive, i.e. vinyl compounds

other than those listed below may be used in the preparation of the compounds of the invention:

Acrylic-type acids and their alkali metal or ammonium salts, such as acrylic acid, methacrylic acid, sodium acrylate, potassium acrylate, ammonium acrylate, sodium methacrylate, etc.;

Other unsaturated organic acids or anhydrides and their salts, such as maleic acid, fumaric acid, itaconic acid, maleic anhydride, mono- or di-sodium maleate, potassium fumarate, ammonium itaconate, etc.,

Acrylic and methacrylic partial and full esters such as the lower alkyl esters, hydroxyesters and acid esters of acrylic and methacrylic acids, i.e. those containing 1 to 6 and preferably 1 to 4 carbon atoms in each ester moiety, including methyl acrylate, ethyl acrylate, butyl acrylate, methyl methacrylate, ethyl methacrylate, methyl ethacrylate, hydroxyethyl acrylate, hydroxypropyl acrylate, acrylic acid dimer, etc.;

Aminoalkylacrylates containing up to 4 carbons in each alkyl or alkylene group such as dimethylaminoethyl methacrylate, diethylaminoethyl acrylate, etc;

Unsubstituted and alkyl substituted acrylamides and methacrylamides containing up to 4 alkyl carbon atoms such as acrylamide, methacrylamide, dimethylacrylamide, ethylmethylacrylamide, methylmethacrylamide, etc.;

Aminoalkylacrylamides containing 1 to 4 alkyl or alkylene carbon atoms, such as dimethylaminopropylmethacrylamide, methacrylamidopropyltrimethylammonium chloride, etc;

Acrylamidoalkylsulfonic acids and their salts containing 1 to 4 alkyl carbon atoms, such as acrylamidomethylpropylsulfonic acid, sodium acrylamidomethylethylsulfonate, etc;

Water-dispersible substituted styrenes, such as styrene sulfonic acid, trimethyl(vinylbenzene) ammonium chloride, etc; and

Other water-dispersible vinyl compounds, such as vinyl esters and vinyl lactams, including vinyl pyrrolidone, vinyl acetate, etc.

One or more than one other monofunctional vinyl compound may be used in the invention.

The relative amounts of diallylic quaternary ammonium salt and the other monofunctional vinyl monomer is not critical. In general, the minimum amount of diallylic quaternary ammonium salt incorporated into the copolymer is usually about 5 mole percent. There is no maximum amount of diallylic monomer, the only limitation being that the product is a copolymer of the diallylic monomer and the other monofunctional vinyl monomer. The preferred and most preferred molar ratios of diallylic quaternary ammonium salt to other monofunctional vinyl compound incorporated into the copolymers are 95:5 to 5:95 and 90:10 to 10:90, respectively.

The crosslinking component may be any polyfunctional ethylenically unsaturated compound which is free of functional groups which would interfere with the ability of the diallylic quaternary ammonium salt and other monofunctional vinyl monomer to form water-swellable polymeric products. It is desirable to use

crosslinking agents which form environmentally acceptable products. Typical of such crosslinking agents are tri- and tetra- allylammonium halides, such as triallylmethylammonium chloride, triallylethylammonium bromide, tetra-allylammonium chloride, tetra-allylammonium bromide, etc; polyfunctional acrylamides, such as methylene bisacrylamide, etc.; polyfunctional acrylic type compounds, such as ethylene glycol diacrylate, ethylene glycol dimethacrylate, trimethylolpropane trimethacrylate, allyl acrylate, etc; and other polyallyl and polyvinyl compounds, such as diallyl phthalate, diallyl maleate, divinylbenzene, etc.

The amount of polyfunctional vinyl compound used is that amount which will effect the desired degree of crosslinking of the polymeric product i.e. an amount which will result in the production of the desired water-insoluble, water-swellable polymeric compound. Thus, any amount of polyfunctional vinyl compound varying from the least amount which is effective to produce products having useful water absorbing properties up to about 20 mole percent may be present in the reaction mixture. Usually, however, the amount of polyfunctional vinyl compound used in the preparation of the products of the invention varies from about 0.005 to about 20 mole percent and preferably about 0.05 to 10 mole percent, based on the total amount of monofuntional and polyfunctional vinyl compound present in the reaction mixture.

The polymerization is carried out in the presence of a free radical generating catalyst. Conventional free radical catalysts, such as organic

peroxides, inorganic persulfates and azo compounds, produce satisfactory results in the preparation of the polymeric product. Representative organic peroxides include benzoyl peroxide, t-butyl hydroperoxide, t-butyl peroctoate, cumene hydroperoxide, t-butyl peroxide, etc. Representative persulfates include potassium persulfate, ammonium persulfate, etc. Representative azo compounds include azobisisobutyronitrile, , etc. Redox radical generators may also be used to catalyze the polymerization. For example, persulfates can be combined with reducing substances such as sulfites or amines to form free radical generating initiators. Examples of redox systems include ammonium persulfate with sodium bisulfite, t-butylhydroperoxide with ferrous ammonium sulfate, etc. The particular catalyst used will, of course, depend upon the polymerization temperature employed and the particular monomers and organic diluents used in the polymerization process. The amount of catalyst used in the reaction of the invention is generally in the range of about 0.001 to 5 percent and preferably in the range of about 0.01 to 1 percent, based on the total weight of monomer present in the reaction zone.

As noted above, water or a liquid in which the monomer charge is soluble constitutes the discontinuous phase and an inert organic diluent, i.e. a liquid in which the monomer and polymer product are insoluble and which will not adversely interfere with the desired polymerization reaction, constitutes the continuous phase. Typical of the inert organic liquids that can be used as the continuous phase are saturated aliphatic or

cylcloaliphatic hydrocarbons such as pentane, hexane, heptane, ligroin, cyclopentane, cyclohexane, methylcyclopentane, etc.; aromatic hydrocarbons such as benzene, toluene, etc.; ketones, such as acetone, methylethylketone, etc. Preferred organic diluents are the saturated aliphatic and cycloaliphatic hydrocarbons such as hexane, heptane and cyclohexane. Mixtures of two or more of the above organic liquids can be used, if desired.

The ratio of continuous phase to discontinuous phase is not critical. The amount of continuous phase in the reaction vessel is desirably great enough to permit the heat developed as a result of the polymerization reaction to be easily dissipated and to maintain the monomer and polymer in the suspended state. The ratio of continuous phase to aqueous phase maintained during the reaction is often about 9:1 to 2:3 and usually about 3:1 to 1:1, on a volume basis.

The concentration of total monomers to aqueous phase is not critical. The optimum concentration will depend upon the entire system. In general the monomer constitutes about 30 to 75% and more often 40 to 65% by weight of the total aqueous phase. It is sometimes found advantageous, however, to use a system in which the discontinuous phase is made up substantially of the monomers.

It is usually preferred to use a suspending agent to maintain the reactants in a stable suspension. Any of the well known suspending agents used for inverse suspension polymerizations can be used in the invention. Examples of suitable suspending agents include the

polymeric suspending agents, such as starch, gelatin, cellulose derivatives, polyvinyl alcohol, etc. A particularly preferred suspending agent is vinyl pyrrolidone-alpha olefin copolymer.

Other additives, such as stabilizers, fillers, molecular weight regulators, etc., may be used in the polymerization. Examples of stabilizers and fillers include talc, hydrophobic silica, calcium carbonate, tricalcium phosphate, hydroxy apatite, Fuller's earth, bentonite, etc. The stabilisers are generally used at concentrations of about .01 to 10% and usually about 0.1 to about 5%, based on the total weight of the reaction mixture.

The following example illustrates a specific embodiment of the invention. Unless otherwise indicated parts and percentages are on a weight basis. In the example the swelling index is obtained as follows: A weighed sample of test polymer is immersed and allowed to remain in an aqueous liquid for one hour. The swollen sample is removed with a screen and permitted to drain in air until all excess water is removed. The sample is then reweighed. The swelling index is obtained from the following equation:

$$\text{swelling index} = \frac{\text{wet sample weight}}{\text{dry sample weight}}$$

EXAMPLE

To 70.8 g of a 68.3% aqueous solution of diallyldimethylammonium chloride were added 21.6 g of acrylic acid, 23.76 g of 50% sodium hydroxide, 0.56 g of a 57.7% solution of triallylmethylammonium chloride,

23.25 g of water, 0.269 g tetrasodium ethylenediaminetetracetate and 0.1287 g of ammonium persulfate. The solution was added to 260 ml of heptane containing 0.1 g of a vinyl pyrrolidone alpha olefin copolymer (sold by GAF Corporation under the trademark Ganex V220) and 3.0 g of hydrophobic silica. The mixture was agitated in a high speed mixer for 5 minutes, then added to a glass reactor equipped with an agitator and heating mantle. The system was purged with nitrogen for one hour, then heated to and maintained at 65-70°C for 3 hours with continuous stirring. The suspension was heated to reflux to remove the water and then cooled. On cooling the product was collected by filtration. The product had a swelling index of 44 in deionized water and 31 in 0.9% saline solution.

The above example illustrates the benefit of the invention. The fact that the polymer had a swelling index of 44 in deionized water and 31 in 0.9% saline solution shows that the polymer is relatively insensitive to saline solution. Thus it can be reliably used to absorb either salt-free or saline solutions.

Although the invention has been described with particular reference to a specific example, it is understood that the invention includes variations of the example. For example, the polymer may be made from three or more monomers. The invention is limited only by the scope of the appended claims.

CLAIMS

1. A water-soluble, water-swellable polymeric compound of

(a) a first component, present in an amount of at least about 80 mole percent, comprised of

(1) at least one diallylic ammonium salt having the structural formula

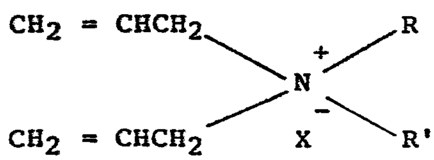

wherein R and R' are the same or different organic radicals or together may form a divalent organic radical and X is an anion, and

(2) at least one other monofunctional vinyl compound which is copolymerizable with said diallylic quaternary ammonium compound, and

(b) a second component, present in an amount effective to produce said water-insoluble, water-swellable polymeric compound but not in excess of about 20 mole percent, comprised of at least one polyfunctional vinyl compound, said molar percentages being based on the total amount of said first and second components in said polymeric compound.

2. A polymeric compound as claimed in claim 1 wherein the molar ratio of the diallylic quaternary ammonium salt to monofunctional vinyl compound in said polymeric compound is about 95:5 to 5:95 and the mole percentages of said first and second components are about 80 to 99.995% and

0.005 to 20% respectively, based on the total amount of said first and second components in said polymeric compound.

3. A polymeric compound as claimed in claim 2 wherein the molar percentages of said first component and said second component are 99.95 to 90 and .05 to 10% respectively, based on the total amount of said first and second components in said polymeric compound.

4. A polymeric compound as claimed in any one of claims 1, 2 and 3 wherein R and R' are selected from saturated hydrocarbon radicals, carboxyl-containing radicals, ethers, esters, hydroxyl-containing radicals and mixtures of these and X is selected from halides, nitrate, nitrite, phosphate, carboxylate radicals and mixtures of these.

5. A polymeric compound as claimed in claim 4 wherein R and R' are alkyl groups having 1 to 6 carbon atoms, X is a halide and said other monofunctional vinyl compound is selected from acrylic acid, alpha-alkyl acrylic acids, ammonium or alkali metal salts of acrylic acid or alpha-alkyl acrylic acids, alkyl esters of acrylic acid or alpha-alkyl acrylic acids, acrylamide, alkylacrylamides and mixtures of these.

6. A polymeric compound as claimed in claim 5 wherein R and R' are alkyl groups having 1 to 4 carbon atoms and said other monofunctional vinyl compound is selected from acrylic acid, methacrylic acid, sodium acrylate, potassium acrylate, methyl acrylate, ethyl acrylate, acrylamide and mixtures of these.

7. A polymeric compound of any one of claims 1 to 6 wherein said polyfunctional compound is selected from

triallylalkylammonium halides, tetraallylammonium halides, polyfunctional acrylamides, polyfunctional acrylic compounds and divinylbenzene.

8. A polymeric compound as claimed in any one of claims 1 to 7 wherein the molar ratio of the diallylic quaternary ammonium salt to monofuntional vinyl compound is about 90:10 to 10:90.

9. A water-dispersible, water-swellable polymeric compound of

(a) about 80 to 99.95 mole percent of a first component comprised of

(1) at least one diallyldialkylammonium halide, and

(2) a compound selected from the group consisting of acrylic acid, methacrylic acid, sodium acrylate, potassium acrylate, ammonium acrylate, methyl acrylate, ethyl acrylate, acrylamide and mixtures of these, and

(b) about 0.05% to 10 mole percent of a second component selected from triallylalkylammonium halide, tetraallylammonium halide, divinylbenzene and mixtures of these, the molar ratio of said diallydialkylammonium halide to the compound (2) being about 10:90 to 90:10.

10. A process for preparing a water-insoluble water-swellable copol...er comprising suspending a reaction mixture comprised of an aqueous solution of at least one diallyl quaternary ammonium salt, at least one other monofunctional vinyl compound polymerizable with

said diallyl quaternary ammonium compound, and, as a cross-linking agent, a polyfunctional vinyl compound in an inert organic liquid and polymerizing the reaction mixture in the presence of a free radical catalyst.

11. A process as claimed in claim 10 wherein the diallyl quaternary ammonium salt is a diallyldialkylammonium halide whose alkyl groups each have 1 to 6 carbon atoms, said other monofunctional vinyl compound is selected from acrylic or alpha-alkyl acrylic acids having 1 to 6 alkyl carbon atoms, ammonium or alkali metal salts of acrylic or alpha-alkyl acrylic acids having 1 to 6 alkyl carbon atoms, alkyl esters of acrylic or alpha-alkyl acrylic acids having 1 to 6 carbon atoms in each of the alpha-alkyl and alkyl ester groups, acrylamide, alkyl-substituted acrylamides having 1 to 6 carbon atoms in each alkyl group and mixtures of these and said polyfunctional vinyl compound is selected from triallylalkylammonium halides having 1 to 6 alkyl carbon atoms, tetrallylammonium halides, divinylbenzene and mixtures of the these.

12. A process as claimed in claim 10 or claim 11 wherein the inert organic diluent is one or a mixture of more than one saturated aliphatic or cycloaliphatic hydrocarbon liquid.

13. A process as claimed in any one of claims 10 to 12 wherein the polymerization is carried out in the presence of a polymeric suspending agent.

14. A process as claimed in claim 13 wherein the suspending agent is a vinyl pyrrolidone-alpha olefin copolymer.

15. A process as claimed in any one of claims 10 to 14 wherein the free radical catalyst is a water-soluble catalyst.

16. A process as claimed in any one of claims 10 to 15 wherein the diallyl quaternary ammonium salt is a diallyldialkylammonium halide wherein each alkyl group has 1 to 4 carbon atoms and the halide is selected from chlorine and bromine.

17. A process as claimed in any one of claims 10 to 16 wherein the other monofunctional vinyl compound is selected from acrylic acid, methacrylic acid sodium acrylate, potassium acrylate, acrylamide and mixtures of these.

18. A process as claimed in any one of claims 10 to 17 wherein the polyfunctional vinyl compound is selected from triallylmethylammonium chloride, tetraallylammonium chloride, divinylbenzene and mixtures of these.

19. A process for preparing a water-insoluble water-swellable copolymer comprising

(a) preparing a water-in-oil suspension comprising as the continuous phase an inert organic liquid and as the discontinuous phase an aqueous solution containing at least one diallyl quaternary ammonium salt, at least one other water-dispersible monofunctional compound polymerizable with said diallyl quaternary ammonium salt, a polyfunctional vinyl compound and a free radical catalyst,

(b) Maintaining the water-in-oil suspension at a temperature sufficiently high and for a sufficient period of time to form the desired polymeric product, and

(c) recovering the polymeric product from the reaction mixture.

20. A process as claimed in claim 19 wherein the molar ratio of diallylic quaternary ammonium salt to said other monofunctional vinyl compound is in the range of about 95:5 to about 5:95, and the molar ratio of total monofunctional vinyl compound to polyfunctional vinyl compound is about 99.995:005 to about 80:20.

21. A process as claimed in claim 19 or claim 20 wherein the polymerization reaction is substantially carried out at a temperature in the range of about 30 to 100°C and the catalyst concentration is about 0.001 to 5 percent, based on the total weight of monomer in the reaction zone.

0161763

European Patent Office

# EUROPEAN SEARCH REPORT

Application number

EP 85 30 2100

| Category | DOCUMENTS CONSIDERED TO BE RELEVANT — Citation of document with indication, where appropriate, of relevant passages | Relevant to claim | CLASSIFICATION OF THE APPLICATION (Int. Cl.4) |
|---|---|---|---|
| X | US-A-3 968 037 (J.E.MORGAN et al.)<br>* Claim 1 *<br>--- | 1-21 | C 08 F 226/04<br>C 08 F 2/32 |
| X | FR-A-1 494 438 (CALGON CORP.)<br>* Claim 1 *<br>----- | 1-9 | |
| | | | TECHNICAL FIELDS SEARCHED (Int. Cl.4) |
| | | | C 08 F |

The present search report has been drawn up for all claims

| Place of search | Date of completion of the search | Examiner |
|---|---|---|
| THE HAGUE | 01-07-1985 | CAUWENBERG C.L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82